# EUROPÄISCHE PATENTANMELDUNG

(11) **EP 1 380 835 A1**
(43) Veröffentlichungstag der Anmeldung: **14.01.2004**
(21) Anmeldenummer: 02090234.2
(22) Anmeldetag: 08.07.2002
(51) Int. Cl.: G01N 27/447, B01L 3/00

(54) **Analysevorrichtung für elektrophoretische Separationsuntersuchungen**

(71) Anmelder: SIEMENS AKTIENGESELLSCHAFT, 80333 München (DE); UNIVERSITY OF MANCHESTER INSTITUTE OF SCIENCES AND TECHNOLOGY, Manchester M60 1QD (GB)
(72) Erfinder: Baldock, Sara, Dr., M16 9RJ Manchester (GB); Fielden, Peter, Prof., BL8 2TG Bury Lancashire (GB); Kretschmer, Hans-Richard, 10999 Berlin (DE); Treves Brown, Bernard, Dr., SK23 7JG High Peak, Derbyshire (GB)

(57) **Zusammenfassung**

Eine Analysevorrichtung zur Durchführung einer elektrophoretischen Separation weist einen Reservoirkanal (13) auf, der mittels eines Verbindungskanals (15) mit einem Trennkanal (14) verbunden ist, um in letzterem eine Probe elektrophoretisch zu untersuchen. Der Zuführkanal (15) und optional auch ein Hilfskanal (16) weisen gegenüber dem Teil des Trennkanals, der in Bezug auf die Separationsrichtung stromabwärts des Zuführkanals (15) liegt jeweils einen Winkel α, β von <90° auf. Dadurch entsteht zwischen dem Zuführkanal (15) und dem Trennkanal (14) bzw. zwischen dem Hilfskanal (16) und dem Trennkanal (14) eine scharfe Abrisskante, welche vorteilhaft dazu geeignet ist, das in dem Trennkanal befindliche Probenvolumen der zu untersuchenden Flüssigkeit mit hoher Genauigkeit von der restlichen zu untersuchenden Flüssigkeit in Zuführkanal (15) und Hilfskanal (16) abzutrennen.

## Beschreibung

Die Erfindung betrifft eine nach dem Prinzip der Elektrophorese arbeitende Analysevorrichtung mit einem Reservoirkanal für eine zu untersuchende Flüssigkeit, einem Trennkanal zur Durchführung der elektrophoretischen Separation und einem Zuführkanal, der den Reservoirkanal mit dem Trennkanal verbindet.

Eine solche Analysevorrichtung ist beispielsweise aus der internationalen Patentanmeldung WO 01/31322 bekannt. In Figur 1 dieses Dokumentes ist ein Beispiel einer solchen Analysevorrichtung dargestellt. Diese weist einen Reservoirkanal für eine zu untersuchende Probe auf. Von diesem Reservoirkanal zweigt ein Kanalsystem mit einem im Vergleich zum Reservoirkanal engeren Querschnitt, bestehend aus einem Zuführkanal, einem Trennkanal und einem Hilfskanal ab. Der Zuführkanal zweigt direkt vom Reservoirkanal ab und mündet rechtwinklig in den Trennkanal. Der Hilfskanal kann als geradlininige Verlängerung des Zuführkanals verstanden werden, so dass Zuführkanal, Hilfskanal und Trennkanal eine Kreuzung ergeben. In diese Kreuzung wird mit Hilfe des Hilfskanals über den Zuführkanal eine kleine Probenmenge in den bereits mit Elektrolyt gefüllten Trennkanal eingebracht. Anschließend findet eine elektrophoretische Separation der Probe unter Anlegung einer Hochspannung an die Enden des Trennkanals statt.

Aufgabe der Erfindung ist es, eine Analysevorrichtung für elektrophoretische Separationsuntersuchungen anzugeben, mittels derer vergleichsweise gut reproduzierbare Untersuchungsergebnisse erzielt werden können.

Die Aufgabe wird erfindungsgemäß dadurch gelöst, dass zwischen einem in Richtung der elektrophoretischen Separation stromabwärts des Zuführkanals liegenden und dem Zuführkanal zugewandt liegenden Wandteil des Trennkanals (Trennkanal-Wandteil) und einem dem Trennkanal-Wandteil zugewandt liegenden zweiten Wandteil des Zuführkanals (Zuführkanal-Wandteil) ein Winkel von weniger als 90° vorgesehen ist. Die Wandteile sind abhängig vom Querschnitt des Zuführkanals und des Trennkanals durch diejenigen den Querschnitt der Kanäle bildenden Wandteile definiert, die die Schenkel des besagten Winkels bilden.

Die Ausbildung eines Winkels von weniger als 90° hat den Vorteil, dass sich für die durch die elektrophoretische Separationsuntersuchung hervorgerufene Strömung von Teilchen eine schärfere Abrisskante an der Berührungslinie zwischen Trennkanal-Wandteil und Zuführkanal-Wandteil bildet, als dies bei einer Ausrichtung des Zuführkanal-Wandelteils zum Trennkanal von 90° der Fall wäre. Es hat sich nun gezeigt, dass hierdurch während der elektrophoretischen Separation weniger Probenteilchen aus dem Zuführkanal mitgerissen werden, so dass vorteilhaft die Probe genauer durch den im Trennkanal befindlichen Teil der zu untersuchenden Flüssigkeit definiert ist. Hierdurch kann das Probenvolumen durch eine gezielte Befüllung des Trennkanals sehr genau eingestellt werden, so dass sich die Separationsergebnisse gut reproduzieren lassen.

Gemäß einer Ausbildung der Erfindung ist vorgesehen, dass zwischen den Mittelachsen des Trennkanals und des Zuführkanals im Bereich einer Einmündung des Zuführkanals in den Trennkanal ein Winkel von weniger als 90° vorgesehen ist. Als Mittelachse der Kanäle soll dabei die Summe der Schwerpunkte der einzelnen Querschnitte der Kanäle verstanden werden. Damit ergibt sich durch die beschriebene Ausrichtung der Mittelachsen der bereits erwähnte Winkel zwischen Trennkanal-Wandteil und Zuführkanal-Wandteil von weniger als 90°. Trennkanal und Zuführkanal können vorteilhafterweise mit einer einfachen und konstanten Querschnittsform ausgebildet werden.

Es ist vorteilhaft, dass der Winkel zwischen den Mittelachsen in einem Bereich von 30° bis 60° liegt. Bei der Auswahl des Winkels in diesem Winkelbereich lassen sich einerseits die Kanäle mit vertretbarem Aufwand fertigen. Andererseits zeigt die Verbindungslinie zwischen Trennkanal-Wandteil und Zuführkanal-Wandteil bei dieser Ausführungsform eine ausgeprägte Wirkung als Abrisskante, um ein definiertes Probenvolumen zu erzeugen.

Eine andere Ausführungsform der Erfindung sieht vor, dass in dem Zuführkanal in Richtung zur Einmündung des Zuführkanals in den Trennkanal eine stetige Querschnittsverjüngung ausgebildet ist. Diese Querschnittsverjüngung bewirkt, dass sich der Trennkanal-Wandteil zur Einmündung hin immer weiter an die Mittelachse des Trennkanals annähert, wodurch auch bei einer lotrechten Ausrichtung der Mittelachsen des Trennkanals und des Zuführkanals zwischen dem Trennkanal-Wandteil und dem Zuführkanalwandteil ein Winkel von weniger als 90° erzeugt wird. Hierdurch wird vorteilhaft die bereits erwähnte Abrisskante für die Probe erzeugt. Ein zusätzlicher Vorteil der beschriebenen Ausbildung des Trennkanals liegt darin, dass die Zuführöffnung des Zuführkanals in den Trennkanal verkleinert wird, wodurch insbesondere die Zugabe sehr geringer Probenmengen in den Trennkanal möglich werden. Selbstverständlich kann auch der Zuführkanal mit sich verjüngendem Querschnitt derart angeordnet werden, dass zwischen den Mittelachsen des Trennkanals und des Zuführkanals im Bereich der Einmündung des Zuführkanals in den Trennkanal ein Winkel von weniger als 90° entsteht. Hierbei überlagern sich besonders vorteilhaft die bereits beschriebenen Effekte zur Verringerung des Winkels zwischen Zuführkanal-Wandteil und Trennkanal-Wandteil.

Es ist vorteilhaft, dass die Querschnittsverjüngung durch konisch spitz zulaufende Wandteile des Zuführkanals gebildet sind. Eine solche Querschnittsverjüngung lässt sich vorteilhaft auf einfache Weise beispielsweise durch Ätztechnik in die Oberfläche eines Substrates einbringen. Ein so strukturiertes Substrat kann dann mit einer Platte abgedeckt werden, wodurch der Querschnitt eines Halbkonus entsteht. Alternativ kann auch die Deckplatte symmetrisch zum Substrat strukturiert werden, wodurch ein konisch spitz zulaufender Kreisquerschnitt im Zuführkanal entsteht. In einem konisch spitz zulaufenden Zuführkanal kann die Strömung vorteilhaft störungsfrei transportiert werden, wodurch die Reproduzierbarkeit des Probenvolumens zusätzlich verbessert wird.

Eine zusätzliche Ausbildung der Erfindung sieht vor, dass gegenüber der Einmündung des Zuführkanals in den Trennkanal ein Hilfskanal zur Unterstützung der Zuführung der zu untersuchenden Flüssigkeit mündet. Vorteilhafterweise wird während der Befüllung des Trennkanals die zu analysierende Flüssigkeit in den Hilfskanal gesogen, was mittels eines Druckes oder auch durch Anlegen einer Spannung erfolgen kann. Dabei wird auch der Trennkanal mit einem definierten Probenvolumen der zu untersuchenden Flüssigkeit beaufschlagt.

Es ist vorteilhaft, dass zwischen einem in Richtung der elektrophoretischen Separation stromabwärts des Hilfskanals liegenden und dem Hilfskanal zugewandt liegenden Wandteil des Trennkanals (weiteres Trennkanal-Wandteil) und einem dem weiteren Trennkanal-Wandteil zugewandt liegenden Wandteil des Hilfskanals (Hilfskanal-Wandteil) ein Winkel von weniger als 90° vorgesehen ist. Vorteilhaft kann dabei zwischen den Mittelachsen des Trennkanals und des Hilfskanals im Bereich einer Einmündung des Hilfskanals in den Trennkanal einen Winkel von weniger als 90° vorgesehen sein. Zusätzlich oder alternativ kann weiterhin vorteilhaft in dem Hilfskanal in Richtung zur Einmündung des Hilfskanals in den Trennkanal eine stetige Querschnittsverjüngung ausgebildet sein.

Für die Ausbildung des weiteren Trennkanal-Wandteils und des Hilfskanal-Wandteils mit einem Winkel von weniger als 90° gilt das für den Trennkanal-Wandteil und den Zuführkanal-Wandteil Gesagte entsprechend. Damit lassen sich die bereits beschriebenen vorteilhaften Wirkungen der Erzeugung einer Abrisskante zur Verbesserung der Reproduzierbarkeit des Probenvolumens analog erreichen.

Eine besonders vorteilhafte Ausführungsform der Erfindung ergibt sich, wenn der Winkel zwischen dem Trennkanal-Wandteil und dem Zuführkanal-Wandteil genauso groß ist, wie der Winkel zwischen dem weiteren Trennkanal-Wandteil und dem Hilfskanal-Wandteil. Hierdurch ergibt sich eine symmetrische Geometrie der durch den Trennkanal, den Zuführkanal und den Hilfskanal gebildeten Kreuzung, wodurch besonders definierte Strömungsverhältnisse erzeugbar sind. Daher trägt diese konstruktive Ausbildung vorteilhaft zu einer weiteren Verbesserung der Reproduzierbarkeit der Probe bei.

Weitere Einzelheiten der Erfindung werden im Folgenden anhand der Zeichnungen beschrieben. Hierbei zeigen
- Figur 1: ein Ausführungsbeispiel der erfindungsgemäßen Analysevorrichtung in perspektivischer Darstellung,
- Figur 2: schematisch ein Ausführungsbeispiel für eine durch Trennkanal, Hilfskanal und Zuführkanal gebildete Kreuzung,
- Figur 3: schematisch ein anderes Ausführungsbeispiel für eine solche Kreuzung und
- Figur 4: ein Ausführungsbeispiel für die Ausbildung der Kanalgeometrie der erfindungsgemäßen Analysevorrichtung.

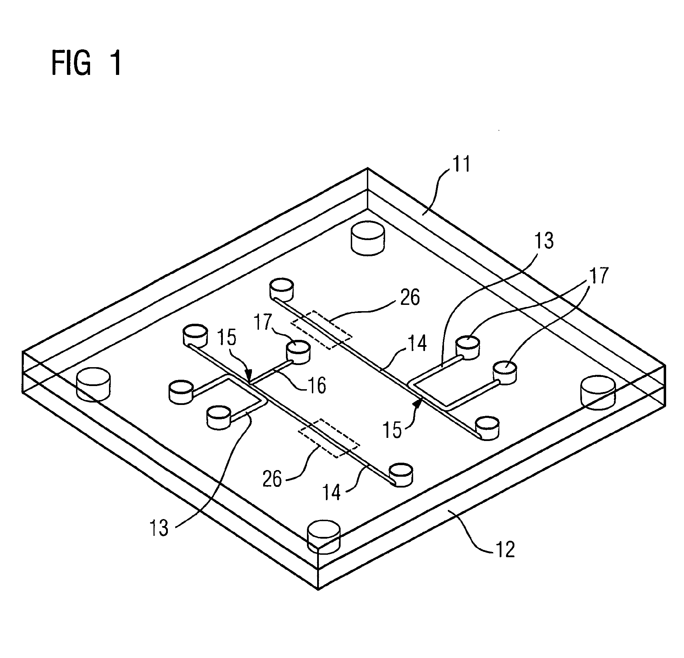

Eine Analysevorrichtung gemäß Figur 1 besteht aus einer oberen, transparenten Platte 11 und einer unteren Platte 12, die durch Bonden miteinander verbunden sind. Die obere Platte ist durch Ätzen strukturiert. Es sind zwei Reservoirkanäle 13 und zwei Trennkanäle 14 ausgebildet. Die Trennkanäle sind über nicht näher dargestellte Zuführkanäle 15 mit den Reservoirkanälen 13 verbunden. In einen der Trennkanäle mündet gegenüber vom Zuführkanal ein Hilfskanal 16.

Alle Kanäle sind an ihren Enden mit Durchlässen 17 versehen, welche eine Verbindung zur Oberfläche der Platte 11 herstellen und so beispielsweise mit Schlauchanschlüssen zur Zu- bzw. Abführung der notwendigen Flüssigkeit verbunden werden können. Weiterhin können die zur Durchführung der elektrophoretischen Separation notwendigen Elektroden in diesen Durchlässen installiert werden.

Die Analysevorrichtung kann für verschiedene elektrophoretische Separationsprozesse genutzt werden. Beispiele hierfür seien die Kapilarelektrophorese oder die Isofokussierung. Besonders vorteilhaft ist die Isotachophorese, bei der der Trennkanal 14 stromabwärts des Zuführkanals mit einem Leitelektrolyt und stromaufwärts des Zuführkanals mit einem Folgeelektrolyt befüllt wird. Die Probe wird anschließend mittels des beschriebenen Verfahrens zwischen Leit- und Folgeelektrolyt in den Trennkanal eingebracht.

Die elektrophoretisch separierten Probenbestandteile können in einem gestrichelt angedeuteten Messfeld 26 detektiert werden. Dieses Messfeld kann beispielsweise mit Elektroden zur Auswertung der Leitfähigkeit der Probenbestandteile ausgestattet sein. Eine andere Möglichkeit ist eine optische Untersuchung, wenn beispielsweise die Probenbestandteile hinsichtlich ihrer Absoptionseigenschaften von UV-Lichte untersucht werden.

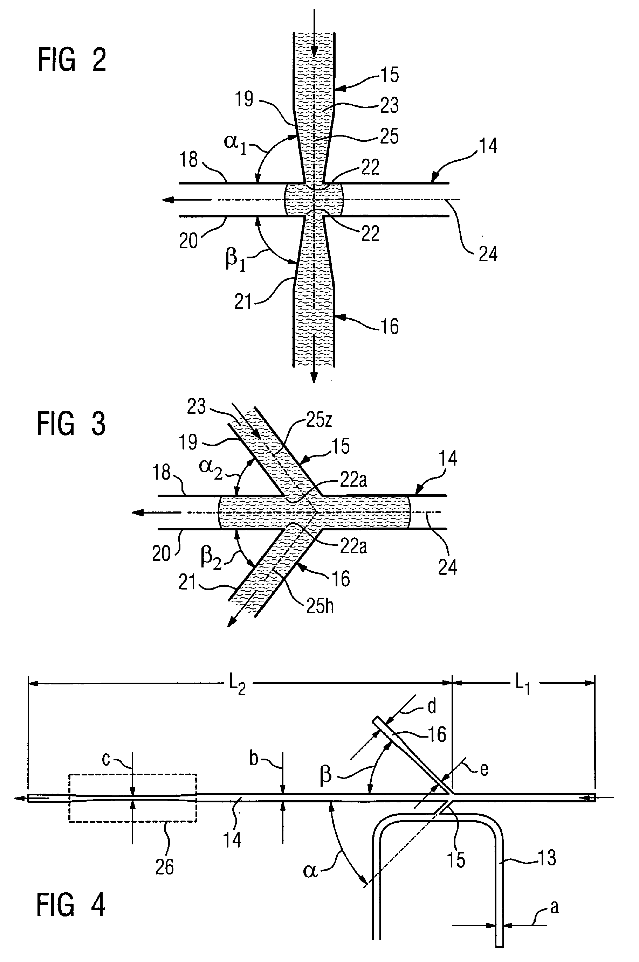

In den Figuren 2 bis 4 sind mögliche Ausgestaltungen von Teilen der Analysevorrichtung gemäß Figur 1 dargestellt. Daher sind gleiche Bauteile mit gleichen Bezugszeichen versehen und werden, soweit identisch, nicht näher erläutert.

In Figur 2 ist der Bereich der Einmündung von Zuführkanal 15 und Hilfskanal 16 in den Trennkanal 14 dargestellt. Im Bereich dieser Einmündung weisen der Zuführkanal 15 und der Hilfskanal 16 eine konische Ausbildung auf, wodurch zwischen einem Trennkanal-Wandteil 18 und einem Zuführkanalteil 19 ein Winkel α₁ kleiner 90° entsteht. Genauso entsteht zwischen einem weiteren Trennkanal-Wandteil 20 und einem Hilfskanalwandteil 21 ein Winkel β₁ von ebenfalls weniger als 90°. Hierdurch entstehen zwei vergleichsweise scharfe Abrisskanten 22, die jeweils durch die Enden des Trennkanal-Wandteils und des Zuführkanal-Wandteils sowie des weiteren Trennkanal-Wandteils und des Hilfskanal-Wandteils gebildet werden.

Entsprechend der angedeuteten Pfeile wird eine zu untersuchende Flüssigkeit 23 durch den Zuführkanal 15 in den Hilfskanal 16 geleitet, was beispielsweise mittels einer am Durchlass (nicht dargestellt) des Hilfskanals angelegten Spannung erfolgen kann. Dabei verdrängt die zu untersuchende Flüssigkeit ein im Trennkanal 14 vorgesehenes Arbeitsmedium (z. B. Leit- und Folgeelektrolyt), wobei der im Trennkanal befindliche Teil der zu untersuchenden Flüssigkeit die Probe bildet. Wird eine elektrophoretische Separation entlang des im Trennkanal angeordneten Pfeiles durch Anlegen einer Hochspannung in Gang gesetzt, so wandert die Probe vom Bereich der Einmündung weg, wobei die Abrisskanten 22 zu einer definierten Trennung der Probe von der restlichen Flüssigkeit in Zuführund Hilfskanal führt.

Eine Mittelachse 24 des Trennkanals und eine gemeinsame Mittelachse 25 von Zuführkanal 15 und Hilfskanal 16 stehen gemäß Figur 2 senkrecht aufeinander. Im Unterschied hierzu bilden gemäß Figur 3 eine Mittelachse 25z des Zuführkanals und eine Mittelachse 25h des Hilfskanals mit der Mittelachse 24 des Trennkanals zur Bildung der Abrisskanten 22a jeweils den Winkel α₂ und β₂, wobei die Mittelachsen 25t parallel zum Zuführkanal-Wandabschnitt 19 und die Mittelachse 25h parallel zum Hilfskanal-Wandabschnitt 21 verläuft. Trennkanal, Zuführkanal und Hilfskanal können beispielsweise einen kreiszylindrischen Querschnitt aufweisen. Alternativ (nicht dargestellt) kann die Gestaltung von Zuführkanal 15 und/oder Hilfskanal 16 entsprechend der Darstellung gemäß Figur 2 auch konisch ausgebildet sein, wodurch die zuvor beschriebenen Effekte der Verkleinerung der Winkel α und β in Bezug auf 90° überlagert werden.

Ein Vergleich der Figuren 2 und 3 zeigt weiterhin, dass unterschiedlich große Proben der zu untersuchenden Flüssigkeit in den Trennkanal eingefüllt werden können. Die Größe der Probe wird insbesondere durch das Zeitintervall bestimmt, in dem der Zuführkanal und der Hilfskanal durchflossen werden, da während dieser Zeit eine Verdrängung des Arbeitsfluides im Trennkanal erfolgt.

In Figur 4 ist eine mögliche Ausgestaltung der Kanalquerschnitte dargestellt, wobei diese Kanäle durch isotropes Ätzen in einem Substrat erzeugt wurden.

Der Reservoirkanal kann beispielsweise eine Breite a von 0,5 mm aufweisen. Der Trennkanal mit einer Länge von l₁ von 13 mm stromaufwärts des Zuführkanals 15 und einer Länge l₂ von 40 mm stromabwärts des Zuführkanals 15 weist eine Breite b von 200 µm auf und verengt sich im Messfeld 26 auf eine Breite c von 100 µm. Der Zuführkanal 15 ist 100 µm breit. Der Hilfskanal 16 verengt sich in seiner Breite und Tiefe von einer Breite d von 200 µm auf eine Breite e von 100 µm. Die Winkel α und β betragen jeweils 45°.

Versuche mit der Geometrie der Analysevorrichtung gemäß Figur 4 haben ergeben, dass Probenvolumen mit sehr hoher Genauigkeit im Trennkanal 14 erzeugt werden konnten. Der gemessene Bereich und die zugehörige Reproduzierbarkeit betrug 0,9 ± 0,8 bis 467 ± 14 nl.

## Patentansprüche

1. Nach dem Prinzip der Elektrophorese arbeitende Analysevorrichtung mit einem Reservoirkanal (13) für eine zu untersuchende Flüssigkeit, einem Trennkanal (14) zur Durchführung der elektrophoretischen Separation und einem Zuführkanal (15), der den Reservoirkanal (13) mit dem Trennkanal (14) verbindet,
**dadurch gekennzeichnet, dass**
zwischen einem in Richtung der elektrophoretischen Separation stromabwärts des Zuführkanals (15) liegenden und dem Zuführkanal (15) zugewandt liegenden Wandteil des Trennkanals (Trennkanal-Wandteil) (18) und einem dem Trennwand-Wandteil (18) zugewandt liegenden Wandteil des Zuführkanals (Zuführkanal-Wandteil) (19) ein Winkel von weniger als 90° vorgesehen ist.

2. Analysevorrichtung nach Anspruch 1,
**dadurch gekennzeichnet, dass**
zwischen den Mittelachsen (25, 25t, h) des Trennkanals (14) und des Zuführkanals (15) im Bereich einer Einmündung des Zuführungskanals in den Trennkanal ein Winkel von weniger als 90° vorgesehen ist.

3. Analysevorrichtung nach Anspruch 2,
**dadurch gekennzeichnet, dass**
der Winkel zwischen den Mittelachsen (24) in einem Bereich von 30° bis 60° liegt.

4. Analysevorrichtung nach einem der vorangehenden Ansprüche, **dadurch gekennzeichnet, dass** in dem Zuführkanal (15) in Richtung zur Einmündung des Zuführkanals in den Trennkanal (14) eine stetige Querschnittsverjüngung ausgebildet ist.

5. Analysevorrichtung nach Anspruch 4,
**dadurch gekennzeichnet, dass**
die Querschnittsverjüngung durch konisch spitz zulaufende Wandteile des Zuführkanals gebildet ist.

6. Analysevorrichtung nach einem der vorangehenden Ansprüche,
**dadurch gekennzeichnet, dass** gegenüber der Einmündung des Zuführkanals (15) in den Trennkanal (14) ein Hilfskanal (16) zur Unterstützung der Zuführung der zu untersuchenden Flüssigkeit mündet.

7. Analysevorrichtung nach Anspruch 6,
**dadurch gekennzeichnet, dass**
zwischen einem in Richtung der elektrophoretischen Separation stromabwärts des Hilfskanals (16) liegenden und dem Hilfskanal zugewandt liegenden Wandteil des Trennkanals (weiteres Trennkanal-Wandteil) (20) und einem dem weiteren Trennkanal-Wandteil (20) zugewandt liegenden Wandteil des Hilfskanals (Hilfskanal-Wandteil) (21) ein Winkel von weniger als 90° vorgesehen ist.

8. Analysevorrichtung nach Anspruch 7,
**dadurch gekennzeichnet, dass**
zwischen den Mittelachsen des Trennkanals (14) und des Hilfskanals (16) im Bereich einer Einmündung des Hilfskanals in den Trennkanal ein Winkel von weniger als 90° vorgesehen ist.

9. Analysevorrichtung nach einem der Ansprüche 6 bis 8,
**dadurch gekennzeichnet, dass**
in dem Hilfskanal (16) in Richtung zur Einmündung des Hilfskanals in den Trennkanal (14) eine stetige Querschnittsverjüngung ausgebildet ist.

10. Analysevorrichtung nach einem der Ansprüche 7 bis 9,
**dadurch gekennzeichnet, dass**
der Winkel zwischen dem Trennkanal-Wandteil (18) und dem Zuführkanal-Wandteil (15) genauso groß ist, wie der Winkel zwischen dem weiteren Trennkanal-Wandteil (20) und dem Hilfskanal-Wandteil (21).
